# EUROPEAN PATENT APPLICATION

(11) **EP 2 072 108 A1**
(43) Date of publication of application: **24.06.2009**
(21) Application number: 07425802.1
(22) Date of filing: 18.12.2007
(51) Int. Cl.: B01D 47/06

(54) **Filter apparatus and method of filtering aeriform substances**

(71) Applicant: B & B INGG. S.p.A., 20092 Cinisello Balsamo (MI) (IT)
(72) Inventor: Borghi, Alessandro Giorgio, 20151 Milano (IT)
(74) Representative: Lunati, Vittoriano

(57) **Abstract**

There is provided a filter apparatus (1) comprising an ionization element (5) suitable to form an electrostatic field (6), a nebulization device (7) suitable to create a flow (8) of water droplets (8a) electrically isolated from one another, the flow (8) being supplied in a direction suitable to pass through the electrostatic field (6) to be ionized thereby and channeling means (4) of aeriform substances (2) suitable to create at least a current (2a) of aeriform substances (2) containing pollutant particles (3) and to convey it through the ionized flow (8), the ionization element (5) being realized by an electrically chargeable cylindrical surface substantially surrounding the flow (8) of water droplets (8a) in proximity of the nebulization device (7).

## Description

The present invention relates to a filter apparatus and a method of filtering aeriform substances of the kind specified in the preamble of Claim 1.

There are currently known different types of devices for the removal of aerosols or pollutants in aeriform substances, commonly called filters, separators or precipitators.

Among these, there are known simple membrane filters, realized by a membrane that interrupts a flow of aeriform substances filtering the pollutant particles of larger dimensions.

However, membrane filters have low efficiency, above all with regard to the finest pollutant particles.

There are also filter apparatus that utilize electromagnetic attraction to attract the pollutant particles from the aeriform substance being purified.

In particular, this is the case of electrostatic filters, otherwise known as electrostatic precipitators or ESPs.

Electrostatic precipitators come in different forms and types, are based on a process of ionization of the pollutant particles and of attraction of these particles by one or more elements provided with an opposite electrical charge to that of the ionized particles.

They commonly comprise a duct, inside which the aeriform substance to be purified flows, electrically connected to ground, and a linear conductor or wire positioned in the duct and electrically isolated from this duct. The wire is at a negative potential of approximately 10-100 kV.

Therefore, it generates an electrostatic field inside the duct that causes ionization of the aeriform substance: the solid and liquid particles suspended in this aeriform substance are negatively charged. The particles with negative charge are then attracted by the surface of the duct connected to ground.

Electrostatic precipitators can also provide for the addition of particles of moisture to the aeriform substance flowing into the duct. In fact, moisture reduces the resistivity of the pollutant particles, favoring ionization thereof.

The aforesaid prior art presents some important drawbacks.

Electrostatic precipitators in fact require a high energy input. The process to ionize gases in fact uses a large amount of energy as it is necessary to ionize all the different types of pollutant particles, which can have high resistivity.

Moreover, after a period of operation of the electrostatic precipitator of variable duration, the elements on which the pollutant particles are deposited are shielded by these particles. Therefore, careful periodic cleaning is required to allow them to function.

Moreover, electrostatic precipitators are not always able to retain the finest pollutant particles, i.e. those with dimensions in the order of tenths of a micrometer.

Finally, beyond the threshold of about 450°C electrostatic precipitators show decreasing efficiency as the temperature of the aeriform substance to be purified increases.

To overcome at least in part the aforesaid drawbacks a particular filter has recently been produced, in which the pollutant particles are captured by a flow of ionized water droplets that intercepts the aeriform substance.

However, production of this filter is very complicated, as water droplets are difficult to ionize. In fact, water, which always contains dissolved elements, has a very high electrical conductivity and thus tends to discharge its electrical charge on the pipes or on other surrounding elements.

In this situation, the technical aim on which the present invention is based is to devise a filter apparatus and a method of filtering aeriform substances capable of substantially overcoming the aforesaid drawbacks.

Within said technical aim an important object of the invention is to obtain a filter apparatus and a method of filtering aeriform substances that has a low energy consumption.

Another important object of the invention is to provide a filter apparatus and a method of filtering aeriform substances capable of capturing even the finest particles of pollutant substances, with dimensions in the order of tenths of a micrometer.

Yet another object of the invention is to provide a filter apparatus and a method of filtering aeriform substances capable of allowing correct ionization of a flow of water droplets, suitable to capture the pollutant particles.

The technical aim and the objects specified are achieved by a process and by a device for purifying aeriform substances characterized in that it comprises one or more of the technical solutions specified in the appended Claims.

Preferred embodiments are specified in the Sub-claims.

Further features and advantages of the invention are better explained below in the detailed description of a preferred embodiment of the invention, with reference to the attached drawings, wherein:
**Fig. 1** schematically shows the apparatus according to the invention;
**Fig. 2** shows a three-dimensional view of a portion of the apparatus according to the invention;
**Fig. 3** shows an enlarged three-dimensional view of the portion of the apparatus shown in Fig. 2;
**Fig. 4** schematically shows the median section of an atomizer nozzle belonging to the apparatus according to the invention;
F**ig. 5a** shows a first step of the method according to the invention;

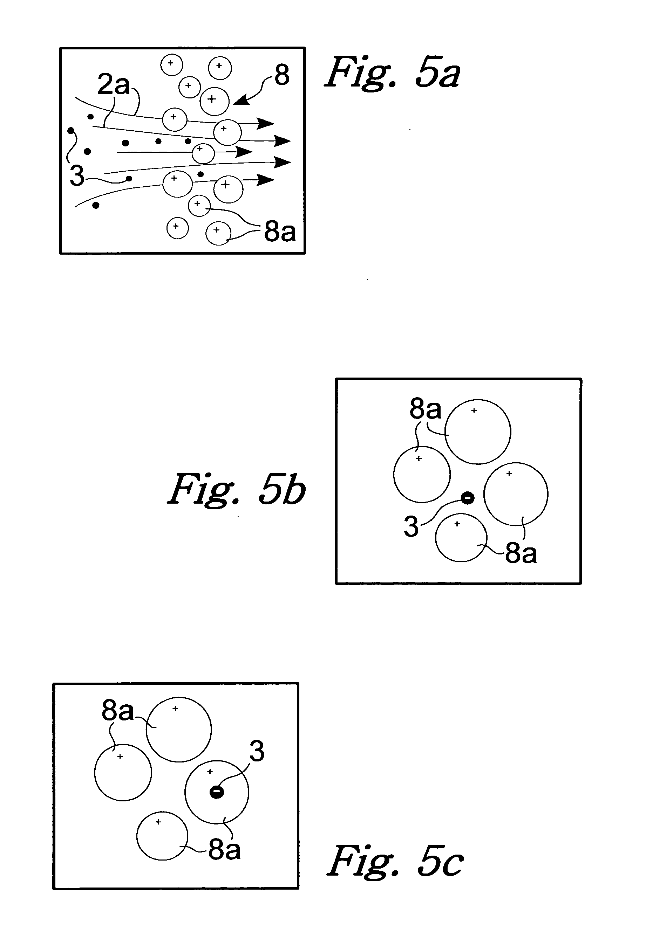

**Fig. 5b** shows a second step of the method according to the invention;
**Fig. 5c** shows a third step of the method according to the invention; and
**Fig. 6** shows a graph that compares the performances of a filter apparatus according to the invention (continuous line) with a filter apparatus according to prior art (dashed line).

With reference to the aforesaid figures, the filter apparatus according to the invention is indicated as a whole with the number **1.**

It is suitable to filter aeriform substances **2,** i.e. to remove pollutant particles **3** present in suspension from these aeriform substances 2, and comprises briefly: at least an ionization element **5** suitable to form at least an electrostatic field **6,** at least a nebulization device **7** suitable to create at least a flow **8** of water droplets 8a electrically isolated from one another and passing through the electrostatic field 6 to be ionized, and channeling means **4** of the aeriform substances 2 suitable to create at least a current **2a** of aeriform substances 2 containing said pollutant particles 3 and to convey it through the flow 8 of ionized water droplets.

In detail, each nebulization device 7 collects water from specific pipes **9** and distributes it to one or more atomizer nozzles **10,** and in particular a single atomizer nozzle 10, suitable to produce a linear flow 8, preferably conical, of water droplets **8a.**

Therefore, this flow 8 is not composed of a continuous current of water but of a plurality of droplets 8a, with diameters in the order of tenths of a millimeter in size, electrically isolated from one another, being spaced from one another.

Moreover, it has a principal direction of movement, substantially realized by the axis of the cone defined by this flow, which substantially and preferably coincides with the vertical direction.

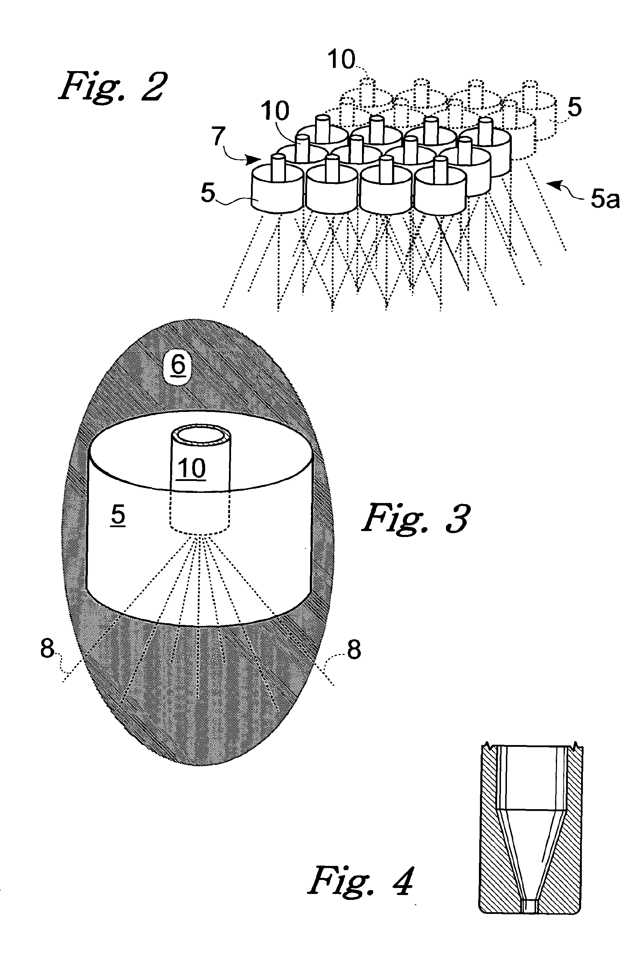

The atomizer nozzles 10 are thus structurally realized by a simple conical nozzle having a single orifice for passage of the flow 8; these nozzles are in particular known with the name of conical atomizer nozzles and more in particular as solid cone atomizer nozzles. A schematic median section of a solid cone atomizer nozzle is shown by way of example in Fig. 4.

The nozzle atomizes the fluid in a known manner, by means of variations in the pressure of this fluid.

Each nebulization device 7 is appropriately positioned in proximity of an ionization element 5.

In detail, each ionization element 5 is realized by an electrically chargeable cylindrical surface substantially surrounding the flow 8 of water droplets 8a in proximity of the nebulization device 7, as shown in Fig. 3.

Preferably, each ionization element 5 is realized by a metal element with a straight cylindrical shape with circular base, and this cylindrical surface is appropriately disposed so that the single atomizer nozzle 10 realizing the nebulization device 7 is disposed in the center and in the upper part of this ionization element 5.

Alternatively, the ionization element 5 can present different cylindrical shapes, having in particular an oval base or a base realized by a polygon or the like. In particular, different shapes to the straight cylinder with circular base are necessary in the case in which a nebulization device 7 comprises a plurality of atomizer nozzles 10.

During operation of the apparatus 1, the ionization elements 5a are electrically charged and thus create electromagnetic fields 6 suitable to ionize the single droplets 8a of the flows 8 that pass through these electromagnetic fields 6.

In particular, the ionization elements 5a are electrically charged, to a positive or negative potential, of around 10 - 20 kV and thus form electrostatic fields 6 extending principally inside the cylindrical surfaces.

Said ionization is produced through an exchange of electrons that also involves the air interposed between the flow 8 and the ionization elements 5. These droplets of ionized water 8a take a positive or negative electrical charge in accordance with the polarity of the electrostatic field 6.

Moreover, the atomizer nozzles 10 are positioned at the top of the ionization elements 5 so that the flows 8 immediately come into contact with the electrostatic field 6.

In all the different possible embodiments it is very important that the flow 8 of water droplets 8a does not come into contact with the nebulization device 7, and in particular with the ionization elements 5, to prevent the electrical charge present in the single water droplets 8a from being discharged onto the surface of these ionization elements 5.

It is therefore necessary to adjust the taper of the flow 8 and the diameter and height of the ionization elements so as to ensure that the flow 8 does not come into contact with these elements.

In detail, it is possible to produce a flow 8 having a conical opening between 10° and 15° and a cylindrical ionization element 5a having a diameter between 10 cm and 20 cm and a height between 2 cm and 10 cm and disposed so that the opening 10a of the atomizer nozzle 10 is positioned along the axis of the cylinder and vertically at a distance between 0 cm and 1 cm from the upper base of the cylinder.

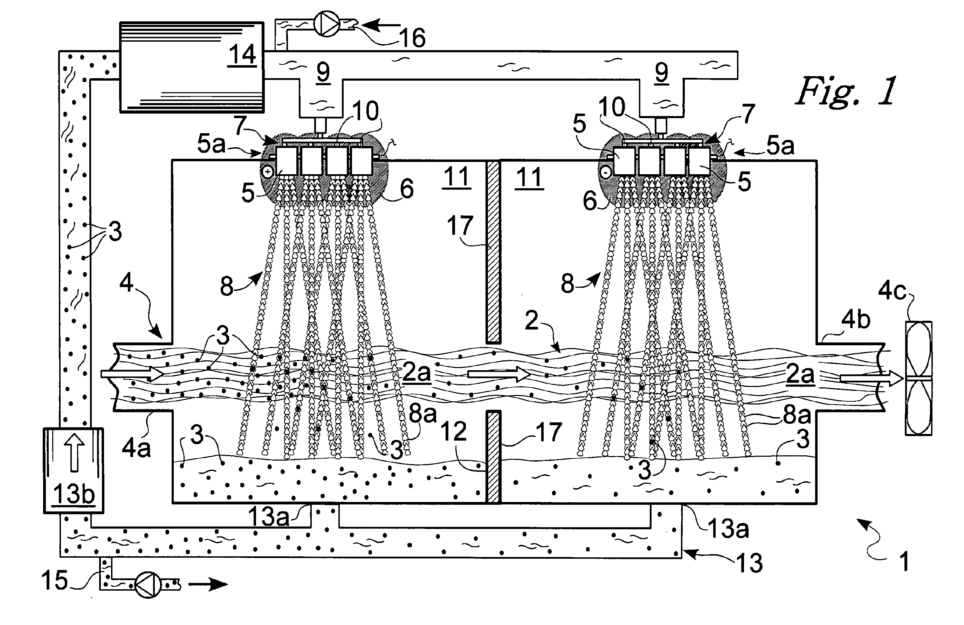

The apparatus 1 is advantageously provided with a plurality of ionization elements 5 and nebulization devices 7, as shown in Figs. 1 and 2.

More in detail, at least a group 5a of ionization elements 5 is preferably provided. In a same group 5a the ionization elements 5 are all positioned in proximity and aligned along a plane and are all charged during operation with the same polarity.

Inside each ionization element 5 of the group 5a a nebulization device 7 is also present, and therefore a plurality of ionized flows 8 all with a same negative or positive charge will be produced.

Two groups 5a with opposite electrostatic charges are then preferably provided. In the apparatus 1 it is then provided that the air current 2a, containing the pollutant particles 3, passes transversely through at least one flow 8 of water droplets 8a.

The air current 2a containing the pollutant particles 3 preferably passes both through positively ionized flows 8 and negatively ionized flows 8.

Structurally, the apparatus 1 preferably comprises a purification chamber **11** containing the various elements described, and in particular at least a group 5a of ionization elements 5 each surrounding a nebulization device 7 and part of the channeling means 4, suitable to create the current 2a inside the chamber 11.

Two purification chambers 11, each containing a single group 5a of ionization elements, are preferably provided. Consequently, the two chambers 11 have groups 5a with opposite potentials.

The two chambers are appropriately separated by a droplet separator 17, substantially realized by a panel made of isolating material or the like.

Moreover, each chamber 11 comprises a container **12**, appropriately created on the bottom of the chamber 11. This container 12 is suitable to store the water coming from the flows 8.

In proximity of these containers 12 outlets **13a** are also provided, which realize the entry to specific ducts **13**. These ducts 13 are preferably connected to the pipes 9 that supply the nozzles 10. The ducts 13 thus perform recirculation of the water.

Means **13b** to convey the water, such as pumps or the like, are also disposed along the ducts 13.

Moreover, a water purifier **14**, of known type, is disposed between the ducts 13 and the pipes 9. Said water purifier **14** is preferably of the self-cleaning type.

The pipes 13 can be disposed either on the inside or on the outside of the chambers 11.

Finally, again along the ducts 13 a T-branch is provided, which leads to a bleed duct **15** equipped with a specific valve (automatic or manual) for periodic or continuous bleeding of the recirculating liquid, to allow the aerosols removed from the gaseous phase and now present in the liquid phase to be eliminated and thus prevent them from accumulating.

Naturally, the liquid removed by periodic or continuous bleeding must be made up by means of the make-up duct **16**, which is also equipped with a manual or automatic shut-off valve.

Operation of an apparatus for purification of aeriform substances, with the above-described structural design is as follows.

The pipes 9 provide substantially clean water, i.e. substantially free of pollutant particles 3, to the nebulization device 7 in which the water is divided by the atomizer nozzles 10 into a plurality of flows 8 formed of water droplets 8a.

The water is emitted at a pressure between 1 and 6 bar.

The flows 8 pass through the electrostatic field 6 of the ionization unit 7 in which they are positively or negatively charged.

Ionization of the water takes place when this is in the form of droplets 8a so that isolation of the single droplets 8a is simply due to their structure. Therefore, no complex methods for isolation of water flows 8 and the like. are required.

However, as the chambers 11 are of opposite polarities, the droplet separator 17, which prevents droplets 8a of opposite polarity from coming into reciprocal contact, is utilized.

After ionization the current 2a containing the pollutant particles 3 passes through the flows 8 of droplets 8a.

At this point the pollutant particles 3 are surrounded by a plurality of ionized droplets 8a. Consequently, the pollutant particles 3 having an opposite electrical charge to the charge of the droplets 8a that surround them are each attracted by one of the droplets 8a and each embedded in a droplet 8a.

In fact the pollutant particles 3a have smaller dimensions than those of the droplets 8a and after bonding thereto remain trapped inside them and become part of the flow 8, freeing the air 2 from their harmful presence.

This method is shown schematically in Figs, 5a, 5b and 5c.

Instead, the pollutant particles 3 that have the same electrical charge as that of the droplets 8a are not captured by these droplets.

To capture these impurities a second group 5a of ionization elements 5 is provided, which produce electrostatic fields 6 with an opposite polarity charge to the electrical charge of the electrostatic fields 6 produced by the first ionization unit 5.

The air current 2a in its journey passes through flows 8 having both polarities, so that both pollutant particles 3 with positive electrical charge and those with negative electrical charge can be captured.

The pollutant particles 3 with neutral electrical charge are instead captured by any ionized flow 8.

In fact, according to studies and experiments by the Applicant, these neutral particles 3 are polarized by the electrical charge of the droplet 8a closest to the charge and thus bond to this charge.

In substance, a movement of charges is produced inside the particle 3, so that charges of opposite polarity to the charges of the closest droplet 8a are positioned on the side of the particle 3 closest to the droplet 8a. The neutral particle 3 is thus polarized and attracted by the droplet 8, to be embedded therein.

The bonding mechanism of the particles, or of the molecules, described above, is known in physics with the name Van der Waals bond.

Consequently, all the pollutant particles 3 are captured and embedded in the flows 8 that are collected in the containers 12.

The water, containing the pollutant particles 3, is transferred by means of the drain 13a and of conveying means 13b and of ducts 13, from the containers 12 to the water purifier 14 that retains the pollutant particles 3a and thus purifies the water.

The water is then returned to the pipes 9 and the purification cycle is repeated.

The invention comprises a new method of filtering aeriform substances.

It provides for an initial step to nebulize a flow of water suitable to divide the flow into a plurality of droplets 8a electrically isolated from one another. Preferably, nebulization produces a flow 8 of water droplets 8a extending in a single plane.

There is then provided a second step producing ionization of the flow 8 of water droplets 8a. This ionization takes place by the creation of at least an electrostatic field 6 by at least an ionization element 5 realized by an electrically chargeable cylindrical surface that substantially surrounds the initial portion of the flow 8 of water droplets 8a.

Appropriately, several flows 8 with different polarities are ionized in parallel.

There is then provided a step to purify the aeriform substances 2, comprising the production of interference between a current 2a of aeriform substances 2 that must be purified, and a flow 8 of ionized droplets 8a.

These droplets 8 capture the pollutant particles 3 present in the air 2 due to the reciprocal electrical attraction and to the polarization of some pollutant particles 3, as previously described.

There is finally provided a step for recirculation and purification of the water utilized to create the flows 8. This step can be accompanied by a step to bleed the polluted waters and a step to make up the water, to allow elimination of the aerosols and of the pollutant substances 3, removed from the gaseous phase and now present in the liquid phase and thus prevent them from accumulating.

Said method of filtering aeriform substances is preferably performed in the apparatus described.

The invention achieves important advantages.

In fact, the apparatus 1 and the method described according to the invention allow optimal air purification.

Particles having diameters even in the order of tenths of a micrometer are in fact captured.

The efficiency of the apparatus 1 is very high: the quantity of particles 3 captured is greater than 99% of the total particles present in the environment.

This apparatus can therefore be utilized in any environment: industrial, domestic, in stores or the like.

Moreover, due to its versatility the apparatus 1 can purify air from both liquid and solid aerosols, and also from any type of polluting substance.

A further advantage is given by the fact that the energy consumption of the present apparatus 1 is much lower with respect to the energy consumption of electrostatic precipitators according to prior art.

In fact, with the same quantity of filtered air, the present apparatus 1 has a consumption of less than 1 % with respect to the consumption of electrostatic precipitators.

In fact, while in electrostatic precipitators the pollutant particles, which can be at a distance from the ionization apparatus and which can have high resistivity, are ionized, in the present apparatus only the water particles, which have low resistivity (in fact, as it is known, water, which always contains some elements in solution, has low resistivity and high conductivity) and which have a specifically determined position and a specific distance from the ionization unit 5, are ionized.

A further important advantage is given by the described cylindrical shape of the ionization elements 5 which surround the flows 8 of water droplets 8a in proximity of the nebulization device 7.

In fact, unlike other configurations experimented by the same Applicant, with this configuration it is possible to utilize atomizer nozzles 10 of common type and in particular solid cone atomizer nozzles, suitable to produce a conical flow. These cone, and in particular solid cone, atomizer nozzles are very inexpensive and also have a very simple section for passage of the fluid flow which prevents the formation of calcareous or saline deposits or the like.

To confirm said advantage the Applicant has carried out experiments utilizing the nozzles 10 and the ionization elements 5 described and utilizing nozzles suitable to emit a linear flow and ionization elements realized by plates facing the flows emitted from said nozzles.

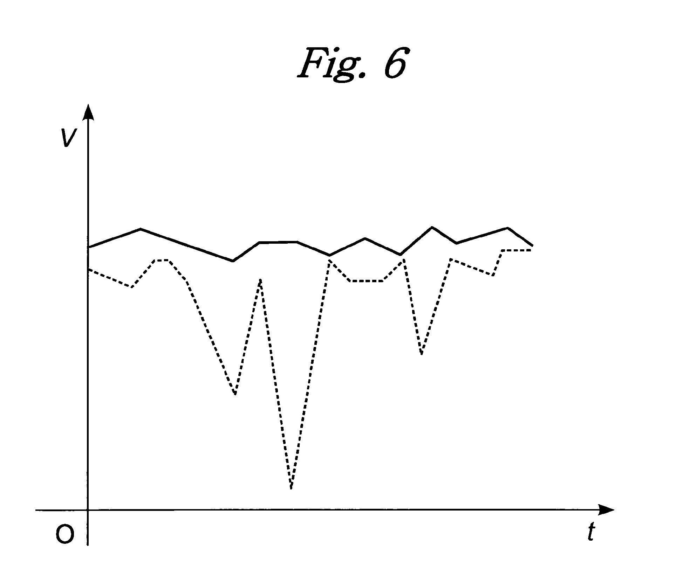

In this experiment, shown in Fig. 6, the voltage (V) of the ionization elements in time (t) was monitored.

A drop in voltage in fact corresponds to a probable short circuit of the nozzles - ionization elements system caused by contact of the fluid 8 with these ionization elements.

The graph shows that the apparatus including the described configuration of atomizer nozzles 10 and of the ionization elements 5 presents a voltage that is always high and constant (continuous line), while the different configuration with flat nozzles shows a voltage that, after a certain period of time, drops and requires specific cleaning of the nozzles to return the voltage to high levels (dashed line).

Finally, the presence of a step of recirculation and purification of the water ensures that the apparatus 1 can substantially be at least partly self-sufficient and self-cleaning.

The invention is susceptible to modifications and variants falling within the scope of the inventive concept.

For example, the apparatus is shown in Fig. 1 with a vertical arrangement of the nebulization device, of the ionization unit, of the air current 2a and of the container 12. This arrangement is convenient from the energy point of view but can be varied. For example, the flow 8 can extend partly in a horizontal rather than in a vertical direction.

## Claims

1. Filter apparatus (1), of the type suitable to remove pollutant particles (3) present in suspension from aeriform substances (2), comprising: at least an ionization element (5) suitable to form at least an electrostatic field (6), at least a nebulization device (7) suitable to create at least a flow (8) of water droplets (8a) electrically isolated from one another, said flow (8) being supplied in a direction suitable to pass through said at least an electrostatic field (6) to be ionized, and channeling means (4) of said aeriform substances (2) suitable to create at least a current (2a) of said aeriform substances (2) containing said pollutant particles (3) and to convey said current (2a) through said at least an ionized flow (8), **characterized in that**: said at least an ionization element (5) presents an electrically chargeable cylindrical surface substantially surrounding said at least a flow (8) of water droplets (8a) in proximity of said nebulization device (7).

2. Apparatus according to Claim 1, wherein said ionization element (5) is a metal element presenting a straight cylindrical surface with circular base.

3. Apparatus according to one or more of the preceding Claims, wherein said nebulization device (7) comprises at least an atomizer nozzle (10).

4. Apparatus according to Claim 3, wherein said nebulization device (7) comprises a single atomizer nozzle (10).

5. Apparatus according to Claims 3 or 4, wherein said atomizer nozzle is a solid cone atomizer nozzle.

6. Apparatus according to one or more of the preceding Claims, comprising at least a group (5a) of said ionization elements (5) including ionization elements (5) all positioned in proximity and suitable to be electrically charged with a same polarity.

7. Apparatus according to Claim 6, comprising two groups (5a) suitable to be electrically charged with opposite polarities.

8. Apparatus according to one or more of the preceding Claims, comprising a droplet separator (17) substantially realized by a panel of isolating material suitable to separate said groups (5a) with opposite polarity.

9. Method of filtering aeriform substances of the type suitable to remove pollutant particles (3) present in suspension from said aeriform substances (2), comprising: an initial step to nebulize water, suitable to form at least a flow (8) divided into a plurality of water droplets (8a) electrically isolated from one another, a step to ionize said at least a flow (8) of water droplets (8a), a step to purify said aeriform substances (2) containing pollutant particles (3), comprising the production of interference between said aeriform substances (2) and said at least an ionized flow (8), **characterized in that** said ionization step takes place by the creation of at least an electrostatic field (6) by at least an ionization element (5) realized by an electrically chargeable cylindrical surface that substantially surrounds the initial portion of said flow (8).
